# EUROPEAN PATENT APPLICATION

(11) **EP 2 355 535 A1**
(43) Date of publication of application: **10.08.2011**
(21) Application number: 10161130.9
(22) Date of filing: 27.04.2010
(51) Int. Cl.: H04Q 1/14

(54) **Intelligent structured cabling system and RJ jack**

(30) Priority: 29.01.2010 US 696578
(71) Applicant: Surtec Industries, Inc., Taipei (TW)
(72) Inventor: Chen, Chou-Hsin, 20647, Keelung City (TW)
(74) Representative: Viering, Jentschura & Partner

(57) **Abstract**

A cabling system and RJ jack are provided. The system has an RJ patch cord having an RJ plug at each end. The RJ jack has a plug opening defining a plug insertion path for receiving one of the RJ plugs of the patch cord. A patch cord insertion/removal detection device is connected to the RJ jack. The insertion/removal detection device includes an insertion/removal detection elastic element with a portion extending into the plug insertion path and a contact element acted on by the elastic element. The elastic element is pressed against the contact element by a plug upon being inserted along the insertion path into the plug opening to change a conduction state of the contact element to provide a signal indicating an inserted plug. At least one of a processing unit and an indicator component is provided for indicating an inserted plug in the RJ jack.

## Description

### BACKGROUND OF THE INVENTION

### Field of the Invention

The invention relates to telecommunication and data networks and more particularly to an intelligent structured cabling system including plural telecommunication and data jacks and one or more patch cords with the system including an insertion/removal detection capability.

### Related Art

Patch panels have been provided for data and telecommunication networks (networks). Such patch panels typically include a number of jacks hardwired to insulation displacement contact's (IDCs), to which connection wires are terminated. For local area network systems and other applications, the jacks are particularly RJ-45 jacks with the jacks connecting to wiring associated with one or more data/telecommunication device such as a personal computer, voice over IP telephone or similar device. A patch cord plug may be inserted in one of the jacks while another plug of the same patch cord may be inserted into another similar jack of a patch panel or into a jack of a switch or other similar device. This allows networks to be configured in a simple and reliable manner.

Switches are often provided with jacks that have indicator lights to indicate the connection of the line to the end device or network. For example, most switches include lights to indicate a 10BaseT, a 100BaseT or a 1000BaseT connection. Providing such an indication is straightforward based on the switch or similar device being an active component and being able to sense the signal over the line. Network cards, modems and other active components typically also have similar indicator lights. Patch panels are typically non-active facilities. Patch panels provide the mechanical and electrical connection of the RJ-45 plug of the patch cord to the RJ-45 jack and from connected IDCs to wires. There has been some interest in providing network managers with information to provide assurance that a proper electrical connection is being made at the patch panel. In particular, with patch panels such as large patch panel arrangements, it is beneficial to know that the patch cord plugs are actually properly inserted into the patch panel jacks.

US patent 6,222,908 discloses a method and device for identifying a specific patch cord connector as it is introduced into or removed from a telecommunications patch system. The method and device includes special connectors of the patch cord in which each of the connectors has a unique identifier. The patch panel itself is provided with an interface module that is near the connector port. When the connector is inserted into a port, the patch cord connector passes through a structure with a sensor that reads the identifier. The system involves a high cost including the cost of specialized patch cords each having a unique identifier.

US patent 7,153,142 discloses a retrofit kit for an interconnect cabling system. The system allows the user to obtain connectivity status, or a map, of a cabling system in the data and/or voice network. The retrofit kit includes a plurality of replacement patch cords. The replacement patch cords forward scanning signals. Adapter panels are employed that comprise spring electrical contacts as well as indication elements (connectivity status indicators - CISs) which are each associated with a corresponding socket (jack). Each of the spring electrical contacts allows transmitting and/or receiving of the scanning signals to allow identification of the connectivity status of the patch panel. The system also requires specialized patch cords and involves expense with regard to retrofitting patch panels with the adapter panels having spring electrical contacts and the CISs.

US patent 7,534,137 discloses a method and apparatus for patch panel patch cord documentation and revision. The patch panel includes ports (including RJ jacks) that are provided with out of band contacts to monitor and report patch cord connectivity information. The out of band contacts send information regarding identification and connectivity status of the associated patch panel port along a ninth wire of a patch cord. This system relies on special patch cords having an additional ninth wire. Accordingly, the system involves specialized patch panels and specialized patch cords and does not allow the use of standard patch cords. This entails additional expense and presents limitations as to adopting the system.

### SUMMARY OF THE INVENTION

It is an object of the invention to provide any intelligent structured cabling system with a plurality of jacks such as RJ 45 jacks and a plurality of RJ 45 patch cords wherein the jacks include features for detecting a patch cord plug insertion/removal state.

According to a further object of the invention, a preferred form of the invention employs standard patch cords with standard RJ-45 plugs.

According to the invention, an intelligent structured cabling system is provided comprising a plurality of RJ45 patch cords with each of the patch cords having an RJ 45 plug at one end and another RJ 45 plug at another end. The system includes a plurality of RJ45 jacks, each RJ45 jack having a plug opening defining a plug insertion path for receiving one of the RJ 45 plugs of one of the patch cords. A patch cord insertion/removal detection device is associated with each of the RJ45 jacks. Each insertion/removal detection device includes an insertion/removal detection elastic element with a portion extending into the plug insertion path and a circuit element acted on by the elastic element. The elastic element is pressed by a plug upon being inserted along the insertion path into the plug opening to make the electrical circuit short or open to provide a signal indicating an inserted plug. The circuit element is not acted on by the elastic element with the plug removed from the opening. At least one of a processing unit and an indicator component is provided for receiving the signal indicating an inserted plug.

The system may further include a central control unit and a communication unit. The processing unit is connected to the central control unit by the communication unit whereby the central control unit records link status of each channel of the intelligent structured cabling system.

The processing unit may control an indication state of the indicator component. The processing unit may be a microprocessor or a micro controller.

The indicator component is an light emitting diode (LED).

The communication unit may comprises an RS 485 interface with a RS485 communications port. The communication unit may also comprise an RS 232 interface with an RS232 communications port. The communication unit may also comprise a wireless transmitter/ receiver unit.

The central control unit may comprise a personal computer.

According to another aspect of the invention an RJ jack is provided for use with an RJ patch cord having an RJ plug at one end and another RJ 45 plug at another end. The RJ jack comprises an RJ45 jack body with a plug opening defining a plug insertion path for receiving one of the RJ plugs of the patch cord. A patch cord insertion/removal detection device is connected with the RJ jack body. The insertion/removal detection device includes an insertion/removal detection elastic element with a portion extending into the plug insertion path and an electrical contact element having at least a first and second electrical contact state. The electrical contact is acted on by the elastic element, the elastic element being pressed toward the electrical contact element by a plug upon the plug being inserted along the insertion path in the plug opening to change the state of the electrical contact element. At least one of a processing unit and an indicator component is provided that is responsive to the change in state of the electrical contact element for indicating an inserted plug.

The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which preferred embodiments of the invention are illustrated.

### BRIEF DESCRIPTION OF THE DRAWINGS

In the drawings:

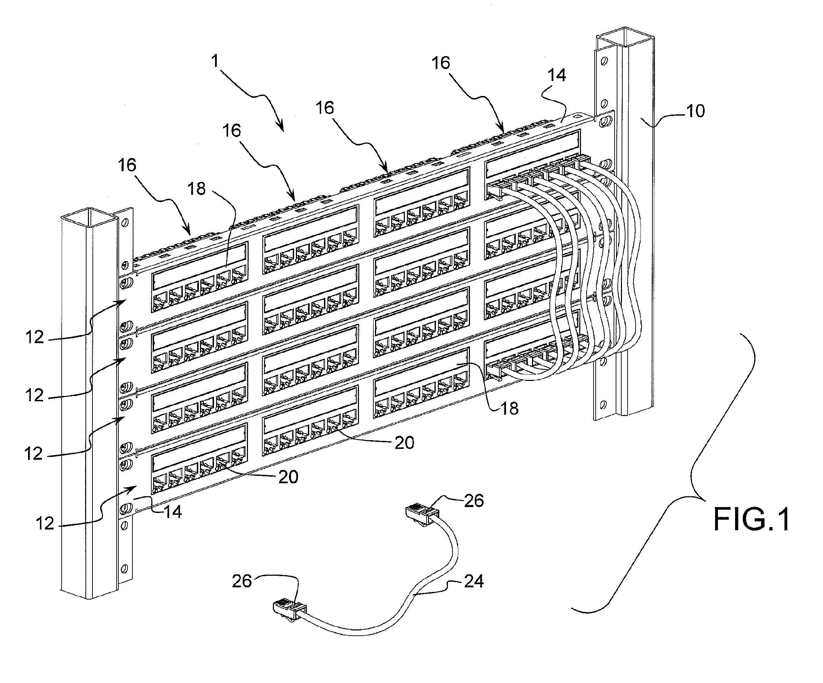

FIG. 1 is a perspective view showing a patch cord and a plurality of patch panels connected to a rack structure with each patch panel having plural RJ jacks for receiving an RJ plug of the patch cord;

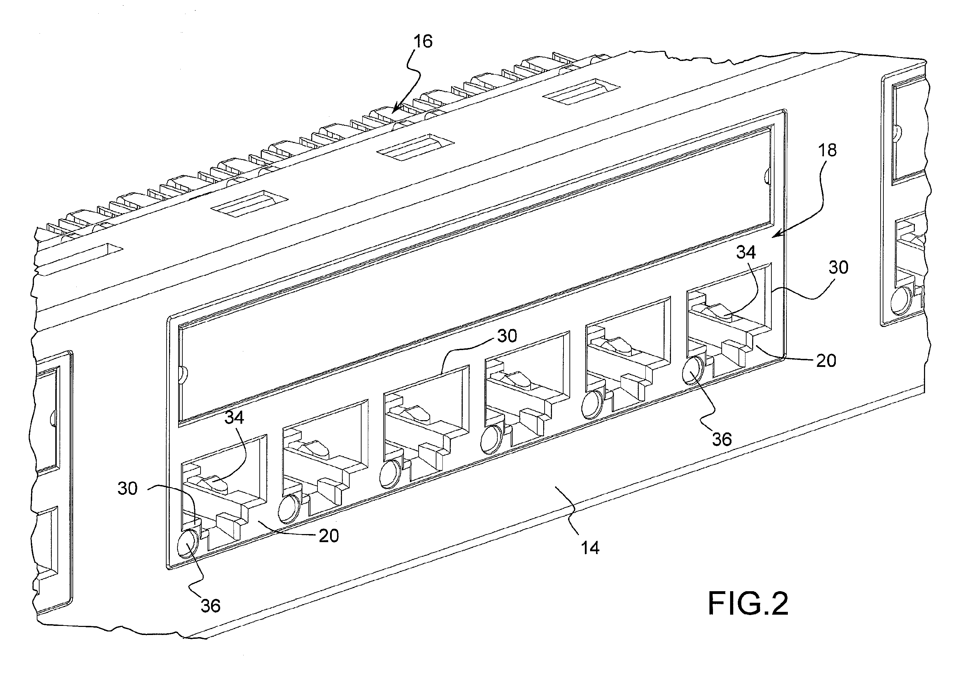

FIG. 2 is a broken away perspective view of a patch panel module with six RJ 45 jacks, each having a structure to detect the insertion/removal status of a patch cord plug;
FIG. 3 is a sectional view through the patch panel showing an RJ plug removed from the RJ jack according to the invention and schematically showing a non-illuminated indicator light indicating a removed plug state;
FIG. 4 is another sectional view through a patch panel showing an RJ plug removed from the RJ jack according to the invention with an elastic detection element with a portion protruding into a path of the plug and not pressing an electrical circuit such that the electrical circuit is in an open or non conducting circuit state;
FIG. 5 is a sectional view through the patch panel, taken at the same location as FIG. 3, showing an RJ plug inserted into the RJ jack according to the invention and schematically showing an illuminated indicator light indicating plug insertion;
FIG. 6 is a sectional view through the patch panel, taken at the same location as FIG. 4, showing an RJ plug inserted into an RJ jack according to the invention with the elastic detection element pressed toward an electrical circuit forcing the electrical circuit into a conductive (short-circuit or closed-circuit) state;
FIG. 7 is a schematic circuit diagram showing various electric circuits associated with individual RJ jacks connected to processing units which are in turn connected to a central control unit in the form of a personal computer (PC) via a communication unit; and
FIG. 8 is a perspective view showing another embodiment of the invention including an outlet plate supporting plural RJ jacks for receiving an RJ plug of the patch cord.

### DETAILED DESCRIPTION OF THE INVENTION

Referring to the drawings in particular, the invention comprises an intelligent structured cabling system generally designated 1. The system 1 includes a plurality of patch panels 12. Each of the patch panels 12 includes a face plate/support bracket 14 which holds a number of termination modules 16. Each patch panel 12 is connected to supports 10 of a rack structure.

The termination modules 16 each have a front side 18 with a plurality of RJ 45 jacks 20. Each RJ 45 jack 20 has an RJ jack opening 30 which defines an RJ 45 plug insertion path. Each RJ jack 20 has spring contacts 28 that extend into the RJ 45 plug insertion path. The spring contacts 28 provide electrical connection to insulation displacement contacts 22 that extend from the back side of the module 16. Wires are terminated to the insulation displacement contacts 22.

A plurality of patch cords 24 are provided, each with an RJ plug 26 at one end and an RJ plug 26 at an opposite end. The patch cords 24 are connected with an RJ plug 26 inserted in an RJ jack opening 30 whereby electrical contacts of the plug 26 physically contact the spring contacts 28. The other plug 26, at the opposite end of the patch cord 24, is inserted in another RJ jack opening 30 of another RJ jack 20. This establishes an electrical path (a channel) from wires of one set of IDCs 22, to the spring contacts 28 of one jack 20, through the patch cord 24, to the spring contacts 28 of another jack 20 to wires terminated to another set of IDCs 22.

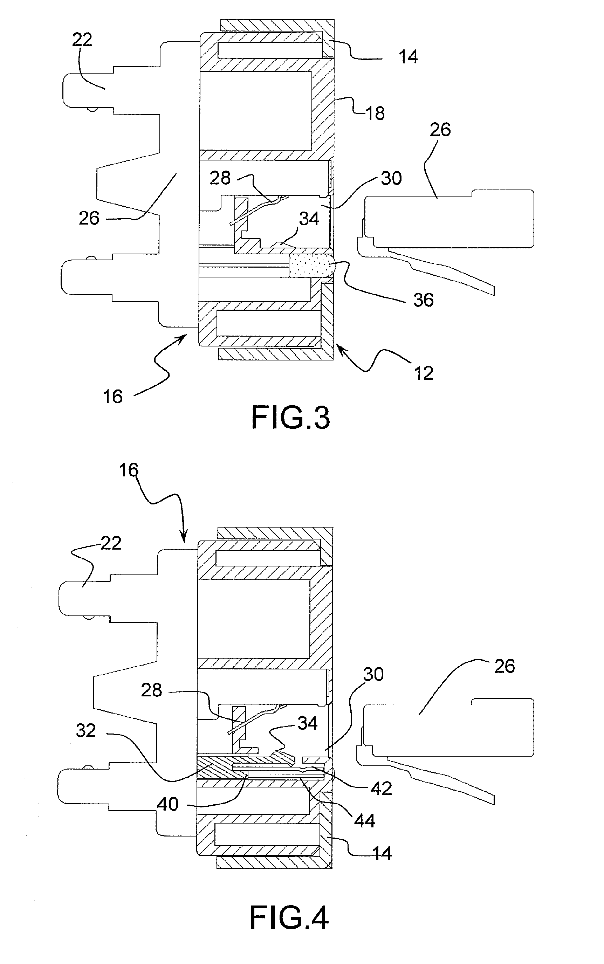

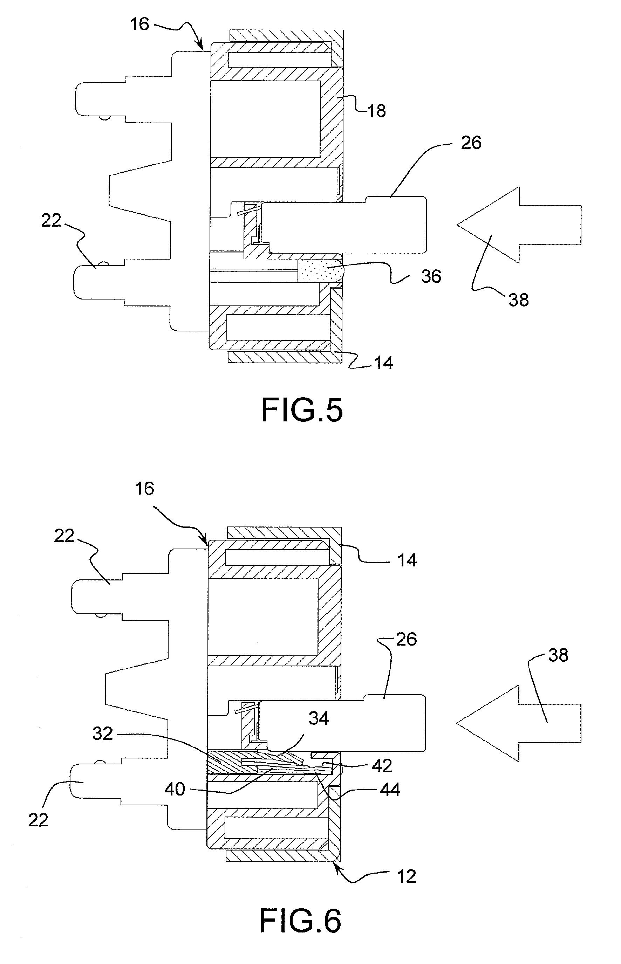

The termination modules 16 each include a jack housing which defines the RJ jack openings 30. The jack housings may advantageously be mounted on a circuit board with the spring contacts 28 connected via conductors to the IDCs 22. The jack housings additionally each support a plug insertion/removal detection elastic element 32 (FIG. 4 and 6). The elastic element 32 is formed of a suitable elastic plastic (or other preferably non conductive elastic material that allows deflection and returns to initial position). The elastic element 32 has an elastic element protruding portion 34 that protrudes into the plug insertion path that is defined by the RJ opening 30 (FIG. 4). As a plug 26 is inserted into an opening 30 of an RJ jack 20, in the direction 38 the electrical plug contacts contact the spring contacts 28. The movement of the plug 26 in the direction 38 along the plug insertion path results in the plug 26 engaging the protruding portion 34 such that the protruding portion 34 bends elastically and is moved out of the plug insertion path. The RJ jack housing also supports a circuit element 40 with a circuit element upper conductive portion 42 and a circuit element lower conductive portion 44. These conductive portions 42 and 44 are made of conductive metal or other suitable conductive material. The movement of the protruding portion 34 results in the elastic element 32 pressing against the circuit element 40. In particular, as shown in FIG. 6, a lower surface of the elastic element 32 presses against the circuit element upper conductive portion 42 such that the circuit element upper conductive portion 42 contacts the circuit element lower conductive portion 44. This closes the circuit 40 or creates a short-circuit state for circuit 40 which provides a signal that can be detected. As can be seen in FIG. 4, when there is no plug 26 within the opening 30 of an RJ jack 20, the circuit element upper conductive portion 42 does not contact the circuit element lower conductive portion 44, such that circuit 40 is an open circuit (there is no electrical contact between portions 42 and 44). The invention uses a signal generated by the different states to indicate different states of the RJ jack. In particular, a signal based on the closed-circuit/short-circuit 40 is a state indicating a plug is inserted in the respective RJ jack 20 and a signal (or lack of the signal) based on an open circuit 40 is a state indicating the RJ jack 20 has no plug inserted therein, namely indicating the removal of the plug 24 or a removed plug 24.

FIG. 3 and 5 schematically show how the state, or a signal indicating the state can be used to provide a visual indication. According to a preferred embodiment a light emitting diode (LED) 36 is provided at each RJ jack 20. As described further below, the indicator state of the LED 36 can be changed based on the state of the circuit 40. With a simple embodiment, LED 36 is switched on with contact between conductive portions 42 and 44, namely the closed-circuit/short-circuit state of circuit 40. The LED 36 is switched off in the case of an open circuit 40. This provides a simple and effective indication of the connection state of the various RJ jacks 20. As schematically shown in FIG. 6, with the plug 26 removed from the RJ jack 20 the LED 36 is not illuminated.

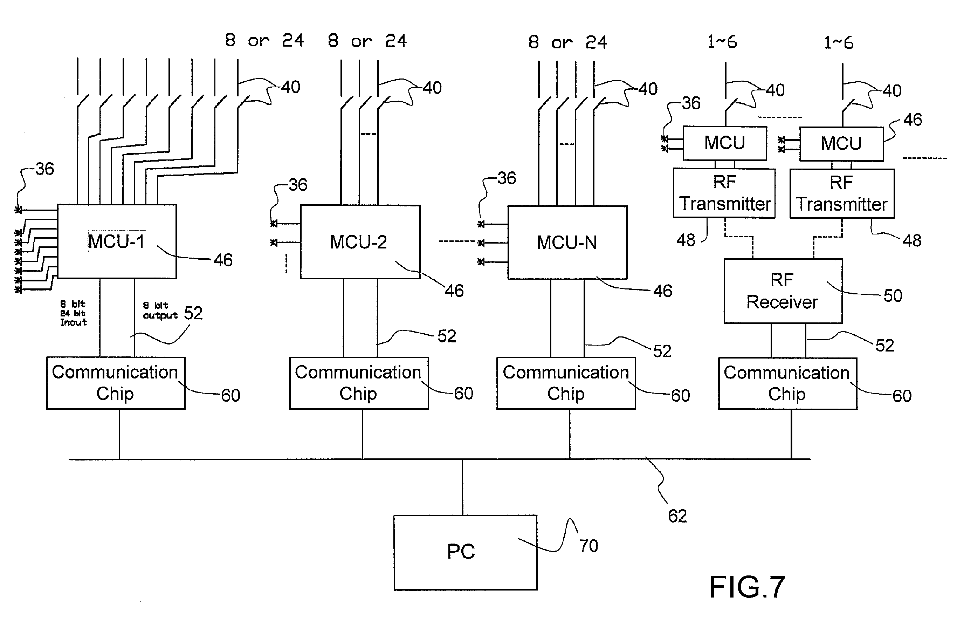

FIG. 7 shows a further system features according to a preferred embodiment of the invention. As can be seen, the circuits 40 are connected to a processing unit in the form of a microcontroller unit (MCU) 46. MCU 46 receives either no signal in the case of an open circuit 40 and receives a predefined signal based on a closed-circuit 40. When each circuit 40 is closed, a corresponding LED 36 is illuminated. According to a further aspect of the invention each microcontroller unit 46 is connected by transmission lines 52 to a communication chip 60. The communication chip 60 is connected by a corresponding network line or bus 62 to a central control unit 70. The central control unit 70 may for example be a personal computer (PC). The communication chip 60 may be part of a RS 485 interface, providing signaling relating to the state of each circuit 40, from the MCU 46 to the PC 70. The communication chip 60 can also be part of an RS-232 interface with RS-232 communications port providing signaling relating to the state of each circuit 40, from the MCU 46 the PC 70. Other communication formats can be established including using local area network formats and protocols to provide state information regarding each RJ 45 jack 20 of each patch panel 12. Further, the communication chip 60 may be provided as part of the same chip as the microcontroller unit 46.

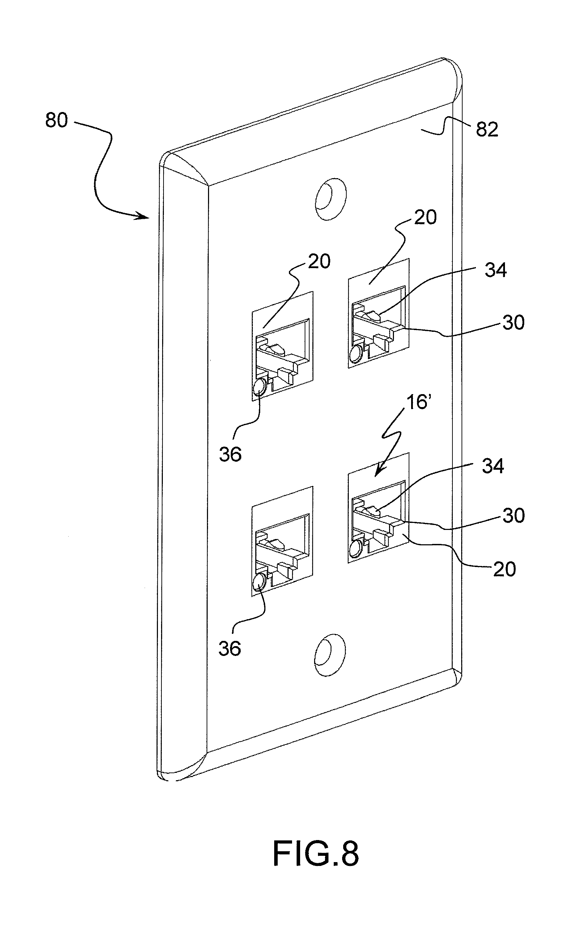

FIG. 8 shows an outlet plate (faceplate) assembly generally designated 80 providing an alternate embodiment according to the invention. The outlet plate or faceplate assembly 80 includes a faceplate 82 that supports a face plate module 16'. The outlet plate or faceplate module 16' includes one or more individual RJ jacks 20, each with connected IDCs 22. The IDCs 22 are accessed from the back of the face plate assembly 80 allowing wires to be terminated. Each individual RJ jack 20 has features which are the same as that described with regard to patch panel module 16. In particular, each RJ jack 20 has an RJ jack plug opening 30 into which a patch plug 26 is inserted. The opening 30 has spring contacts as well as an elastic element protruding portion 34. As described with reference to FIG. 3, 4, 5 and 6, the protruding portion 34 is engaged by a plug 26 as it is inserted into the opening 30. As can be seen in FIG. 6, the inserted plug 26 presses the protruding portion 34 into the upper conductive portions 42 such that the upper conductive portion 42 is urged into electrical contact with lower conductive portion 44 to complete or close the circuit of circuit element 40. The closed circuit or short-circuit state of circuit 40 produces a signal which reaches an associated microcontroller unit 46 to change the state of the indicator 36. As described with reference to FIG. 7, it is also possible to feed the signals to a central control unit 70, allowing the link status of each channel (connection state of each jack 20) to be recorded.

Each embodiment with connected central control unit 70 allows the overall system to maintain statistics and provide information as to the connection status. Every port of a panel 12 or outlet plate assembly 80 has an address (identity) recognized by the associated MCU 46. Each communication chip 60 has a specific address or identifier to distinguish itself in a network. Based on the MCU 46 knowing the origin of the signals from each port and the address of the communication chip 60, the identification of each port and its status in a panel 12 or in a outlet plate assembly 80 is known to the control unit 70. With the outlet plate assemblies 80 and several patch panels 12 extensive information relating to a number of ports (RJ jacks) can be provided. This allows one to build a software system to indicate and organize the connection information of the cabling system for an MIS engineer or user of the system. The extensive information is provided while still using a standard RJ 45 plug. With software run at the central control unit 70, the user can be presented with a great deal of information in a simple format.

While specific embodiments of the invention have been described in detail to illustrate the application of the principles of the invention, it will be understood that the invention may be embodied otherwise without departing from such principles.

## Claims

1. An intelligent structured cabling system comprising:
a plurality of RJ45 patch cords, each of said patch cords having an RJ 45 plug at one end and another RJ 45 plug at another end;
a plurality of RJ45 jacks, each RJ45 jack having a plug opening defining a plug insertion path for receiving one of the RJ 45 plugs of one of the patch cords;
a patch cord insertion/removal detection device associated with each of said RJ45 jacks, each insertion/removal detection device including an insertion/removal detection elastic element with a portion extending into said plug insertion path and a circuit element acted on by said elastic element, said elastic element being pressed by a plug, upon being inserted along said insertion path into said plug opening, to make said electrical circuit conducting or open to provide a signal indicating an inserted plug and said circuit element not being acted on by said elastic element with said plug removed from said opening; and
at least one of a processing unit and an indicator component for receiving said signal indicating an inserted plug.

2. The system according to claim 1, further comprising:
a central control unit; and
a communication unit, wherein said processing unit is connected to said central control unit by said communication unit whereby said central control unit records link status of each channel of the intelligent structured cabling system.

3. The system according to claim 1, wherein the processing unit controls an indication state of said indicator component.

4. The system according to claim 1, wherein the processing unit is a microprocessor or a micro controller.

5. The system according to claim 1, wherein the indicator component is an light emitting diode (LED).

6. The system according to claim 2, wherein the communication unit comprises an RS 485 interface with a RS485 communications port.

7. The system according to claim 2, wherein the communication unit comprises an RS 232 interface with an RS232 communications port.

8. The system according to claim 2, wherein the central control unit comprises a computer.

9. The system according to claim 2 , wherein the communication unit comprises a wireless transmitter/ receiver unit.

10. A cabling system comprising:
an RJ patch cord having an RJ plug at one end and another RJ plug at another end;
an RJ jack having a plug opening defining a plug insertion path for receiving one of the RJ plugs of the patch cord;
a patch cord insertion/removal detection device connected to said RJ jack, said insertion/removal detection device including an insertion/removal detection elastic element with a portion extending into said plug insertion path and a contact element acted on by said elastic element, said elastic element being pressed against said contact element by a plug upon the plug being inserted along said insertion path into said plug opening to change a conduction state of said contact element to provide a signal indicating an inserted plug; and
at least one of a processing unit and an indicator component for receiving said signal indicating an inserted plug in said RJ jack.

11. An RJ jack for use with an RJ patch cord having an RJ plug at one end and another RJ plug at another end, the RJ jack comprising:
an RJ jack body with a plug opening defining a plug insertion path for receiving one of the RJ plugs of the patch cord;
a patch cord insertion/removal detection device connected with said RJ jack body, said insertion/removal detection device including an insertion/removal detection elastic element with a portion extending into said plug insertion path and an electrical contact element having at least a first and second electrical contact state and acted on by said elastic element, said elastic element being pressed toward said electrical contact element by a plug upon being inserted along said insertion path in said plug opening to change the state of said electrical contact element; and
at least one of a processing unit and an indicator component responsive to the change in state of said electrical contact element for indicating an inserted plug.

12. The RJ jack according to claim 11, further comprising:
a central control unit; and
a communication unit, wherein said processing unit is connected to said central control unit by said communication unit whereby said central control unit records link status of each channel of the intelligent structured cabling system.

13. The RJ jack according to claim 11, wherein the processing unit controls an indication state of said indicator component.

14. The RJ jack according to claim 11, wherein the processing unit is a microprocessor or a micro controller.

15. The RJ jack according to claim 11, wherein the indicator component is an light emitting diode (LED).

16. The RJ jack according to claim 12, wherein the communication unit comprises an RS 485 interface with a RS485 communications port.

17. The RJ jack according to claim 12, wherein the communication unit comprises an RS 232 interface with an RS232 communications port.

18. The RJ jack according to claim 12, wherein the central control unit comprises a computer.

19. The RJ jack according to claim 12, wherein the communication unit comprises a wireless transmitter/ receiver unit.
